# EUROPÄISCHE PATENTSCHRIFT

(11) **EP 0 742 625 B1**
(45) Veröffentlichungstag und Bekanntmachung des Hinweises auf die Patenterteilung: **26.08.1998**
(21) Anmeldenummer: 95106954.1
(22) Anmeldetag: 09.05.1995
(51) Int. Cl.: H02G 3/04

(54) **Kabelkanal**
Trunking
Goulotte

(43) Veröffentlichungstag der Anmeldung: 13.11.1996
(73) Patentinhaber: Hermann Kleinhuis GmbH. & Co. KG, D-58507 Lüdenscheid (DE)
(72) Erfinder: Marquardt, Ralf, D-58507 Lüdenscheid (DE)
(74) Vertreter: Buse, Karl Georg, Dipl.-Phys.

(56) Entgegenhaltungen:
- EP-A- 0 392 956
- EP-A- 0 644 640
- DE-B- 1 241 511

## Beschreibung

Die Erfindung bezieht sich auf einen Kabelkanal, bestehend aus einem Kabelkanalunterteil und einem lösbar damit verbindbaren Deckel, bei dem die Seitenwandungen des Kabelkanalunterteils über Halteklammern abstandhaltend miteinander verbunden sind, und der Boden des Kabelkanalunterteils in Längsrichtung verlaufende Halteleisten aufweist, die gegebenenfalls zum lösbaren Anbringen wenigstens einer den Aufnahmeraum des Kabelkanalunterteils in einzelne Kammern unterteilenden Trennwand benutzbar sind.

Derartige Kabelkanäle sind in mannigfachen Ausführungsformen bekannt. Das gleiche gilt auch für die einem solchen Kabelkanal zugeordneten Halteklammern, die mit den diametral gegenüberliegenden Seitenwandungen des Kabelkanalunterteils zusammenwirken, und die diese auf Abstand halten sollen. Bisher sind derartige Halteklammern als zusätzlicher Bestandteil des Kabelkanals ausgebildet. Dies gilt beispielsweise für solche bekannten Halteklammern, die im Spritzgußverfahren hergestellt sind. Eine solche Ausbildung und Gestaltung der Halteklammern ist nachteilig, insbesondere ist das Herstellen, Konfektionieren und Einbringen der Klammern mit einem hohen Aufwand verbunden und dadurch sehr kostenintensiv. Darüber hinaus sind die bisherigen Halteklammern als lose Zubehörteile eines Kabelkanals anzusehen. Aus diesem Grunde besteht die Gefahr, daß die Halteklammern, z.B. beim Transport der Kabelkanäle, verlorengehen können und dann dem Benutzer nicht mehr zur Verfügung stehen.

Man hat zwar bereits vorgeschlagen, mehrere Halteklammern zu einer Baueinheit zusammenzufügen. Eine solche Baueinheit besteht aus mehreren Halteklammern, die über Rasten und Gegenrasten lösbar miteinander verbunden sind. Zwar läßt sich auf diese Art und Weise eine Baueinheit von Halteklammern bilden, die einem Kabelkanal zugeordnet werden kann. Es wird dadurch zwar die Anzahl der Einzelteile verringert, nicht aber der wesentliche Nachteil beseitigt; denn nach wie vor kann die Baueinheit als Ganzes verlorengehen. Dann hat der Benutzer überhaupt keine Halteklammern mehr zur Verfügung.

Ein Kabelkanal der infragekommenden Art ist durch die EP 0 392 956 A2 bekannt geworden. Bei diesem bekannten Kabelkanal sind sowohl Halteklammern als auch Trennwände vorhanden. Die Halteklammern sind unterschiedlich gestaltet; sie können bei dieser Ausführungsform untereinander und mit Teilen des Kabelkanals verbunden werden. Dabei ist eine scharnierartige Verbindung zwischen den einzelnen Halteklammerteilen vorgesehen. So ist es beispielsweise möglich, die Halteklammern mit den Seitenwänden einerseits und mit den Trennwänden andererseits zu verbinden.

Bei dieser Ausführungsform des Kabelkanals werden die vorhandenen Trennwände für sich hergestellt und dann mit leistenartigen Vorsprüngen des Bodens des Kabelkanalunterteils verbunden.

Durch diese Ausführungsform ergeben sich Nachteile bei der Herstellung und der Verwendung der Kabelkanäle, denn die Trennwände müssen für sich hergestellt und dann in einem zusätzlichen Arbeitsgang mit dem Kabelkanal lösbar verbunden werden. Dadurch ist das Herstellen, Konvektionieren und Einbringen der Trennwände mit einem hohen Aufwand verbunden und daher sehr kostenintensiv.

Hier setzt die Erfindung ein. Sie will dem Benutzer nach wie vor solche Kabelkanäle zur Verfügung stellen, die mit Halteklammern und/oder mit Trennwänden ausgerüstet sind, wobei die Halteklammern und Trennwände in grundsätzlich bekannter Weise mit dem Kabelkanal, insbesondere mit dem Kabelkanalunterteil, verbunden werden können, jedoch soll nunmehr der Kabelkanal so ausgebildet werden, daß eine wirtschaftlichere Herstellung und Montage ermöglicht wird.

Sinngemäß liegt der Erfindung die Aufgabe zugrunde, Kabelkanäle der eingangs näher gekennzeichneten Art weiter zu verbessern, insbesondere derart, daß auf ein gesondertes Herstellen und Beilegen von Halteklammern, Trennwänden od.dgl. verzichtet wird.

Erfindungsgemäß wird zur Lösung dieser Aufgabe vorgeschlagen, daß die Halteklammer und/oder die Trennwand ein vorgestanzter Bereich des Bodens des Kabelkanals. oder einer der Seitenwände des Kabelkanals ist.

Durch die erfindungsgemäße Ausbildung eines Kabelkanals ergeben sich im Vergleich mit dem Bekannten erhebliche Vorteile. So wird zunächst auf die gesonderte Herstellung einer Halteklammer bzw. einer Trennwand ganz verzichtet. Vielmehr ist entweder die Halteklammer oder die Trennwand ein Bestandteil des Kabelkanals, vorzugsweise des Kabelkanalunterteils. Dieser Bestandteil des Kabelkanalunterteils kann vom Benutzer, z.B. durch Zerstören von vorhandenen Haltestegen, herausgetrennt werden, um dann seine endgültige Funktion, nämlich die einer Halteklammer oder einer Trennwand, erfüllen zu können.

Der Kerngedanke der vorliegenden Erfindung besteht darin, einen Teil eines Kabelkanals, vorzugsweise den Kanalboden, so zu gestalten, daß er zugleich Halteklammern, Trennwände od.dgl. aufweist, die dann vom Kabelkanal getrennt und dann als eigentliche Bauteile eingesetzt werden können.

Die Erfindung läßt sich sowohl bei solchen Kabelkanälen anwenden, die aus einem Kunststoff hergestellt sind, als auch bei solchen, die aus einem metallischen Werkstoff, z.B. aus Stahlblech, bestehen. Im erstgenannten Falle kann das Verfahren zur Herstellung des erfindungsgemäßen Kabelkanalunterteils in einer Extrusion und einer Stanzung bestehen. Dabei lassen sich Werkstoffe, wie PVC, einsetzen. Soweit Stahlbleche oder generell metallische Werkstoffe zur Herstellung des Kabelkanals herangezogen werden, erfolgt eine Stanzung und Prägung.

Hinsichtlich der Ausgestaltung der Erfindung sind mehrere Möglichkeiten vorgesehen. Nach einem ersten Vorschlag der Erfindung erfaßt der als Halteklammer dienende, ausgestanzte Bereich des Bodens Abschnitte der Leisten dieses Bodens.

Dabei ist vorgesehen, daß die Abschnitte der Leisten des Bodens des Kabelkanals als. Befestigungsleisten der Halteklammer benutzbar sind, indem sie nach dem Entfernen der Halteklammer vom Boden mit Durchbrüchen von Bereichen der Seitenwände des Kabelkanals zusammenwirken.

Bei einer bevorzugten Ausführungsform der Erfindung ist vorgesehen, daß die Befestigungsleisten pilzförmigen Querschnitt aufweisen, und daß die Durchbrüche in den Seitenwandungen unterschiedlich groß bemessen sind, derart, daß der größere Durchbruch dem Einführen der Befestigungsleiste dient, während die Begrenzungswandungen des kleineren Durchbruches mit den Schultern des Pilzkopfes der Befestigungsleiste im Sinne einer Lagesicherung der Halteklammer zusammenwirken.

Die oberen Enden der Seitenwände des Kabelkanals können jeweils einen quer zu ihnen verlaufenden Innenflansch haben. In diesem sind die Durchbrüche für die Unterbringung von Teilen der Halteklammer vorgesehen.

Hinsichtlich der Lage der vorgestanzten Teile des Kabelkanalunterteils ergeben sich mehrere Möglichkeiten. Nach einem ersten Vorschlag der Erfindung ist der vorgestanzte Bereich für die Halteklammer quer zur Längsrichtung des Kabelkanals angeordnet.

In diesem Falle empfiehlt es sich, daß die Leisten im Boden unterhalb des die Durchbrüche aufweisenden Innenflansches der Seitenwände des Kabelkanals angeordnet sind.

Nach einem weiteren Vorschlag der Erfindung ist der vorgestanzte Bereich für die Halteklammer in Längsrichtung des Kabelkanals angeordnet. In diesem Falle empfiehlt es sich, daß sich die Befestigungsleisten der Halteklammer über deren Gesamtlänge erstrecken. Dabei hat die Halteklammer jeweils an ihrem Ende und in ihrer Mitte liegend einen Vorsprung; dieser dient zum Anbringen der Halteklammer an den Seitenwänden des Kabelkanals.

Dabei ist auch vorgesehen, daß die genannten Vorsprünge Teilstücke einer Leiste sind, die dem Boden des Kabelkanals, in der Mitte zwischen zwei Leisten liegend, angeformt sind.

In diesem Falle ist es zweckmäßig, daß die Halteklammer, unmittelbar neben dem Vorsprung liegend, jeweils einen Durchbruch aufweist. Dieser kann z.B. in Draufsicht gesehen quadratisch gestaltet sein.

In allen Fällen ist vorgesehen, daß die vorgestanzte Halteklammer mit dem Boden des Kabelkanals über zerstörbare Haltestege verbunden ist. Diese können vorzugsweise diagonal gegenüberliegend an Seitenkanten der in Draufsicht gesehen rechteckigen Halteklammer angeordnet sein. Daneben ist jedoch auch die Anordnung von Haltestegen möglich, die diametral gegenüberliegend an den Seitenkanten der Halteklammer vorgesehen sind. In allen Fällen können die Haltestege vom Benutzer zerstört werden. Dies geschieht dann, wenn die Halteklammer vom Boden od.dgl. entfernt werden soll. Das Zerstören kann z.B. durch Herausdrehen oder auch durch Durchschneiden der Haltestege erfolgen. Im erstgenannten Falle kann auf ein besonderes Werkzeug verzichtet werden, im zweitgenannten Fall kann ein Werkzeug, wie ein Messer oder auch ein Schraubendreher, benutzt werden.

Nach einem weiteren Vorschlag der Erfindung ist die Halteklammer an Innenflanschen der Seitenwände des Kabelkanals derart festlegbar, daß Teile der Halteklammer mit Schlitzen und einem Durchbruch des Innenflansches zusammenwirken. Dabei empfiehlt es sich, daß der Innenflansch der Seitenwand in gruppenweiser Anordnung jeweils zwei Schlitze aufweist, zwischen denen in mittiger Anordnung der erwähnte Durchbruch liegt.

Gemäß einem anderen Vorschlag der Erfindung bestehen die Halteteile der Halteklammer jeweils aus einem im Querschnitt L-förmigen Teilstück, welchem unter Freihaltung eines Spaltes ein keilförmiges, weiteres Teilstück zugeordnet ist. Diese Halteteile der Halteklammer wirken mit Ausnehmungen zusammen, die am Innenflansch der Seitenwand des Kabelkanals angeordnet sind. In diesem Falle empfiehlt es sich, eine Vielzahl von Ausnehmungen in Kabelkanallängsrichtung hintereinanderliegend am Innenflansch der Seitenwand des Kabelkanals anzuordnen.

Bei den bisher geschilderten Ausführungsformen der erfindungsgemäßen Halteklammer ist vorgesehen, daß die vorgestanzte Halteklammer Teile der Leisten erfaßt, die sich am Boden des Kabelkanalunterteils befinden. Dies gilt sowohl für die Ausführungen, bei denen die Halteklammer quer zur Kabelkanallängsrichtung vorgesehen ist, als auch bei solchen Ausführungsformen, bei denen die Halteklammer in Kabelkanallängsrichtung liegt. Im Gegensatz dazu kann die Erfindung auch dann ausgenutzt werden, wenn ein Kabelkanal an seinem Boden keine Leisten aufweist.

In diesem Falle ist vorgesehen, daß die Halteklammer ein vorgestanzter Körper eines ebenen Bodens des Kabelkanals ist, der Halteklammerarme aufweist, von denen einer einen Haltevorsprung hat. Dabei ist die vorgestanzte Halteklammer über entfernbare Haltestege zeitweise mit dem Boden des Kabelkanals verbunden. Bei einer speziellen Ausführungsform einer solchen Halteklammer ist vorgesehen, daß an jedem Ende der Halteklammer zwei Halteklammerarme angeordnet sind, die durch einen einen Eintritt aufweisenden Zwischenraum voneinander getrennt sind, und von denen der eine Halteklammerarm den Haltevorsprung aufweist, der nach dem Trennen der Halteklammer vom Boden wahlweise in einen der Durchbrüche des Innenflansches der Seitenwand des Kabelkanals einsetzbar ist.

Dabei empfiehlt es sich, daß die dem Haltevorsprung des einen Halteklammerarmes gegenüberliegende Teilfläche des anderen Halteklammerarmes eine das Anbringen der Halteklammer am Innenflansch erleichternde Abschrägung aufweist.

Nach einem anderen Vorschlag der Erfindung weist die in einem ebenen Boden des Kabelkanals vorgestanzte Halteklammer an ihren freien Enden jeweils zwei Außenarme auf, zwischen denen ein Mittelarm mit einem Haltevorsprung angeordnet ist.

Dabei empfiehlt es sich, die untereinander gleichgestalteten Außenarme über jeweils einen Zwischenraum von dem Mittelarm zu trennen. Dabei ist ferner der Haltevorsprung im Bereich des vorderen freien Endes der einen Außenseite des Mittelarmes angeordnet.

In diesem Falle empfiehlt es sich, daß die Endbereiche der Halteklammer unter Verwendung von Biegekanten aus der Grundebene der Halteklammer abgebogen sind.

Während bei den bisher geschilderten Ausführungsformen der Erfindung der Kabelkanal vorgestanzte Bereiche aufweist, die als Halteklammer ausgebildet sind, ist es auch möglich, andere Teile des Kabelkanals als vorgestanzte Körper auszubilden. Bei einer solchen abgewandelten Ausführungsform der Erfindung ist vorgesehen, daß der Boden des Kabelkanals wenigstens einen ausgestanzten Trennabschnitt aufweist, der nach seinem Entfernen aus dem Boden auf eine Leiste desselben aufsteckbar ist. Die Leiste ist dabei in bekannter Weise an der Innenseite des Bodens des Kabelkanalunterteils angebracht. Bei dieser Ausführungsform der Erfindung empfiehlt es sich ferner, am Boden des Kabelkanals unter Freilassung eines Zwischenraumes Trennwandzungen vorzusehen, die wiederum unter Freilassung eines Spaltes mit einer leistenförmigen Verdickung des Bodens zusammenwirken.

In den Figuren der Zeichnungen ist die Erfindung in mehreren Ausführungsbeispielen dargestellt, und zwar zeigen:
- Fig. 1: in schaubildlicher Darstellung einen Kabelkanal mit einer ersten Ausführungsform der zugehörigen Halteklammer, wobei diese noch mit dem Kabelkanalunterteil verbunden ist und bei fehlendem Deckel,
- Fig. 2: ebenfalls in schaubildlicher Darstellung und bei fehlendem Deckel eine abweichende Ausführungsform des Kabelkanals mit einer zweiten erfindungsgemäß ausgebildeten Halteklammer, letztere noch mit dem Kabelkanalunterteil verbunden,
- Fig. 3: in Draufsicht und teilweise weggebrochen sowie in verkleinertem Maßstab denjenigen Bereich eines Kabelkanalunterteils, in dem sich die ausgestanzte Halteklammer befindet,
- Fig. 4: im vergrößerten Maßstab und in schaubildlicher Darstellung einen weiteren Kabelkanal, bei fehlendem Deckel, mit einer dritten Ausführungsform der erfindungsgemäß vorgestanzten Halteklammer, wobei diese noch mit dem Boden des Kabelkanalunterteils verbunden ist,
- Fig. 5: im verkleinerten Maßstab und im Querschnitt einen weiteren Kabelkanal mit einer vierten Ausführungsform der erfindungsgemäßen Halteklammer, wobei diese jedoch bereits in ihre wirksame Lage überführt ist, und bei in strichpunktierten Linien wiedergegebener Lage des Deckels des Kabelkanalunterteils,
- Fig. 6: eine Draufsicht auf den Kabelkanal nach der Fig. 5, bei entferntem Deckel und bei derjenigen Lage der ausgestanzten Halteklammer, den diese vor dem Entfernen aus dem Boden des Kabelkanalunterteils einnimmt,
- Fig. 7: einen Längsschnitt durch eine fünfte Ausführungsform der vorgestanzten Halteklammer,
- Fig. 8: eine Draufsicht auf einen im verkleinerten Maßstab wiedergegebenen Haltekanal, wobei in dieser Figur die Lage der Halteklammer nach Fig. 7 wiedergegeben ist, den diese nach dem Vorstanzen im Boden des Kabelkanalunterteils einnimmt, und
- Fig. 9: im vergrößerten Maßstab und in schaubildlicher Darstellung einen weiteren Kabelkanal bei fehlendem Deckel, bei dem im Boden vorgestanzte Trennwandabschnitte vorgesehen sind, wobei diese noch mit dem Boden des Kabelkanalunterteils verbunden sind.

Es sei zunächst erwähnt, daß in den Figuren der Zeichnungen nur diejenigen Teile eines Kabelkanals wiedergegeben sind, die für das Verständnis der Erfindung Bedeutung haben. So ist insbesondere weitgehend auf die Darstellung eines Deckels verzichtet, der die obere Öffnung des Kabelkanalunterteils verschließt, und der mit bekannten Mitteln, insbesondere mit Rastverbindungen mit dem Kabelkanalunterteil verbunden werden kann. Auch sind die in dem Aufnahmeraum des Kabelkanalunterteils unterzubringenden elektrischen Geräte, Einrichtungen u.dgl. nicht mit dargestellt. Diese können eine an sich bekannte Ausbildung haben und in ebenfalls bekannter Weise in dem Aufnahmeraum eines Kabelkanalunterteils untergebracht werden.

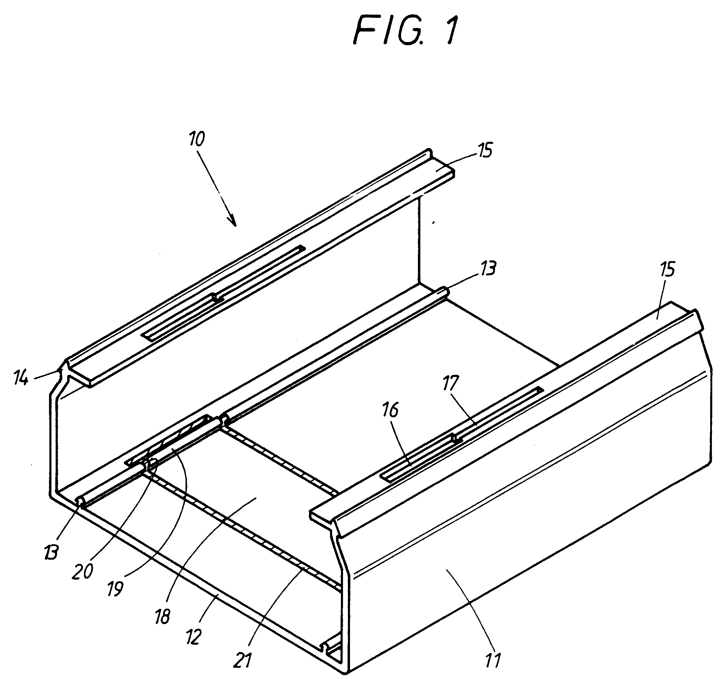

Der dem Ausführungsbeispiel nach der Fig. 1 der Zeichnung zugrundeliegende Kabelkanal ist generell mit 10 bezeichnet. In dieser Fig. 1 ist nur der nicht näher bezeichnete Kabelkanalunterteil wiedergegeben, dessen obere Öffnung durch einen grundsätzlich bekannten Deckel verschlossen werden kann. Bei dem Kabelkanal 10 gemäß der Fig. 1 handelt es sich um einen einstückigen Hohlkörper von im wesentlichen U-förmiger Querschnittsgestalt. Die Seitenwandungen des Kabelkanals 10 sind dabei mit 11 bezeichnet. In ihrem unteren Bereich werden die Seitenwandungen durch einen Boden 12 miteinander verbunden, dieser liegt quer zu den Seitenwandungen 11. Auf der Innenseite des Bodens 12 sind in Kabelkanallangsrichtung durchlaufende Leisten 13 vorgesehen. Diese Leisten 13 haben einen pilzkopfartigen Kopfbereich, d.h. der nicht näher bezeichnete Verbindungsteil der Leiste 13 geht über eine Schulter in den Pilzkopf über.

Der obere Teil der Seitenwände 11 ist nach innen gezogen. Im Endbereich dieser Einziehung befindet sich jeweils eine durchlaufende Rast 14. Mit dieser Rast 14 können Gegenrasten des nicht dargestellten Deckels zusammenwirken, uni diesen mit dem Kabelkanalunterteil lösbar zu verbinden.

An der Innenseite der Seitenwandungen 11, und zwar am äußeren Ende, ist jeweils ein Innenflansch 15 vorgesehen. Die Stirnflächen der beiden Innenflansche 15 der diametral gegenüberliegenden Seitenwände 11 zeigen aufeinander zu. Jeder der beiden Innenflansche 15 hat zunächst einen breitenmäßig größeren, langgestreckten Durchbruch 16, der unter Bildung einer Schulter in einen schmaleren Durchbruch 17 übergeht. Der Durchbruch 17 ist etwa gleich lang wie der Durchbruch 16, jedoch ist der Durchbruch 17 breitenmäßig wesentlich kleiner bemessen. In der Fig. 1 ist jeweils bei einem Innenflansch 15 nur ein Durchbruch 16 bzw. ein weiteren Durchbruch 17 vorgesehen. Insbesondere bei länger bemessenen Kabelkanälen 10 kann die Anzahl der Durchbrüche 16 bzw. 17, die dem Innenflansch 15 zugeordnet sind, wesentlich vergrößert werden.

Erfindungsgemäß ist nun im Boden 12 des Kabelkanals 10 mindestens eine Halteklammer vorgestanzt; diese ist im gewählten Ausführungsbeispiel mit 18 bezeichnet. Das Vorstanzen der Halteklammer 18 geschieht soweit, daß diese Halteklammer nur über zwei Haltestege mit dem Boden 12 des Kabelkanals 10 verbunden bleibt. Diese, in der Fig. 1 nicht dargestellten Haltestege können zerstört werden, beispielsweise lassen sie sich mit einem Werkzeug durchtrennen. Die Halteklammern 18 lassen sich aber auch durch Druckeinwirkung von, Boden 12 trennen, wobei ein Zerstören der Haltestege durch diesen Druck erfolgt.

Wie die Fig. 1 der Zeichnungen erkennen läßt, verläuft die Halteklammer 18 quer zu den Seitenwandungen 11. Die Halteklammer 18 erfaßt auch die Leisten 13. Es wird von diesen Leisten 13 ein kleiner Abschnitt 19 abgetrennt. Dieser Abschnitt 19 ist der Befestigungsteil der Halteklammer 18. Nach dem Entfernen der Halteklammer 18 aus dem Boden 12 wird diese um 180° gedreht. Danach werden die Befestigungsteile 19, dies sind die abgetrennten Abschnitte der Leiste 13, durch den Durchbruch 16 des Innenflansches 15 hindurchgeführt. Nach dem Durchführen kann eine Verschiebung der Halteklammer in Kabellängsrichtung erfolgen. Dies hat den Erfolg, daß die Stege des Leistenabschnittes 19 zwar in den Durchbruch 17 des Innenflansches 15 gelangen können, die Schultern des Pilzkopfes legen sich jedoch gegen die Begrenzungswandungen des Durchbruches 17, so daß ein Herausziehen der Halteklammer 18 aus dem Durchbruch 17 nicht mehr möglich ist. Auf diese Weise ist mit einfachen Mitteln eine Lagesicherung der Halteklammer 18 an den Seitenwandungen 11 des Kabelkanals herbeigeführt.

Wie aus der Fig. 1 der Zeichnung ersichtlich, sind die Leisten 13 so an der Innenfläche des Bodens 12 des Kabelkanals 10 angeformt, daß sie unterhalb der Unterseite des Innenflansches 15 liegen. Der Einfachheit halber ist in der Fig. 1 nur das Ausstanzen einer einzigen Halteklammer 18 wiedergegeben. Selbstverständlich könnte insbesondere bei längeren als den dargestellten Kabelkanälen auch eine größere Anzahl von Halteklammern im Bereich des Bodens 12 des Kabelkanals 10 vorgestanzt werden.

Im dargestellten Ausführungsbeispiel nach der Fig. 1 der Zeichnung ist der mittlere Bereich der Halteklammer 18, also der Bereich der zwischen den Befestigungsleisten 19 liegt, eben gehalten. Sofern größere Druckkräfte durch die Halteklammer 18 aufgenommen werden müssen, kann man in diesem Bereich auch eine Profilierung, z.B. eine Warmprägung, vornehmen. Durch eine solche Profilierung kann die Stabilität der Halteklammer 18 wesentlich verbessert werden.

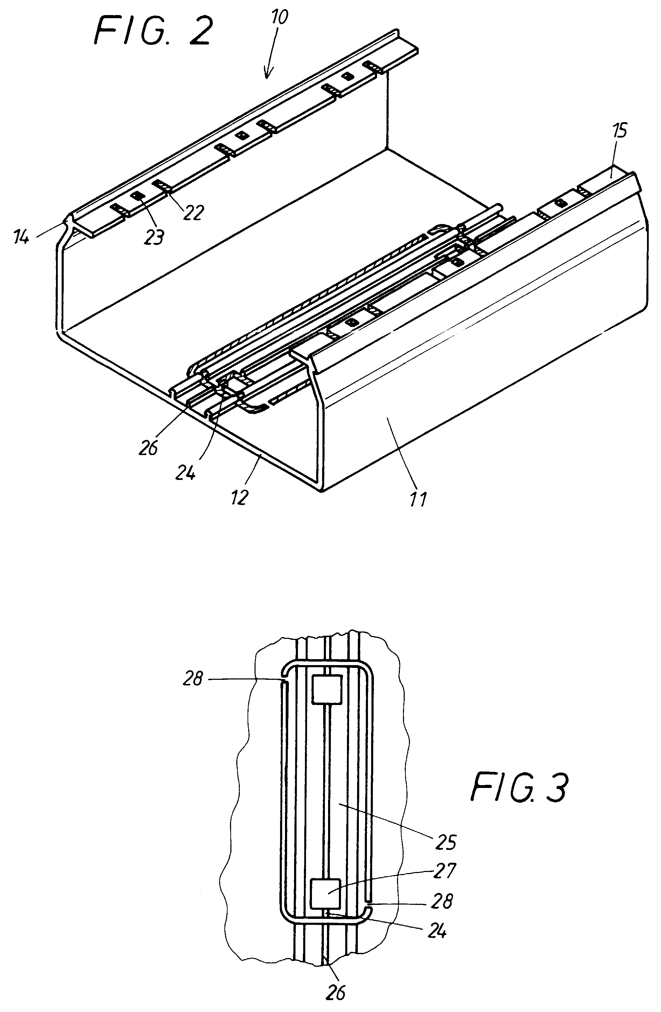

In den Fig. 2 und 3 der Zeichnungen ist eine weitere Ausführungsform des Kabelkanals 10 gemäß der Erfindung wiedergegeben. Das Grundprofil des Kabelkanals 10 ist dabei beibehalten. Es liegt somit wiederum ein im wesentlichen U-förmigen Querschnitt aufweisender Kabelkanalunterteil vor, der eine obere Öffnung aufweist, die in bekannter Weise durch einen Deckel verschlossen werden kann. Abweichend von dem Ausführungsbeispiel des Kabelkanals nach der Fig. 1 der Zeichnung sind die in Längsrichtung durchlaufenden Leisten 13 nunmehr in der Mitte des Bodens 12 angeordnet. In der Mitte zwischen den beiden Leisten 13 liegend ist eine weitere Leiste vorgesehen, die jetzt mit 26 bezeichnet ist, und die eine im Querschnitt rechteckige Gestalt aufweist. Gemäß der Erfindung ist im Boden 12 des Kabelkanals 10 nach den Fig. 2 und 3 wiederum eine Halteklammer vorgestanzt, diese ist jedoch nunmehr mit 25 bezeichnet. Die Lage der Halteklammer 25 ist im Vergleich mit der Lage der Halteklammer 18 nach der Fig. 1 geändert worden, und zwar liegt die Halteklammer 25 nunmehr in Längsrichtung des Kabelkanals 10. Beim Vorstanzen der Halteklammer 25 werden daher nicht nur die Leisten 13, sondern auch die mittige Halteleiste 26 erfaßt. Es entsteht jeweils im Bereich der einen Stirnseite der Halteklammer 25 liegend ein Haltevorsprung 24. An diesen schließt sich jeweils ein Durchbruch 27 an, der, wie die Fig. 3 am besten erkennen läßt, etwa quadratisch gehalten ist. Die Halteklammer 25 bleibt nach ihrem Vorstanzen nur über Haltestege 28 mit dem Boden 12 verbunden. Diese Haltestege 28 liegen diagonal versetzt mit dem Boden 12 verbunden. Diese Haltestege 28 liegen diametral versetzt zueinander. Durch Entfernen der Haltestege 28 kann ein vollständiges Trennen der Halteklammer 25 vom Boden 12 des Kabelkanals 10 erfolgen.

Die Fig. 2 der Zeichnungen läßt erkennen, daß auch der Kabelkanal 10 nach dieser Ausführungsform mit insgesamt zwei Innenflanschen 15 versehen ist, jedoch ist dieser Innenflansch mit anderen Einrichtungen versehen, die ein Anbringen der jetzt mit 25 bezeichneten Halteklammer an diesem Innenflansch 15 ermöglichen. Es sind nämlich im Bereich des Halteflansches 15 Schlitze 22 vorgesehen, die zum freien Ende des Innenflansches 15 hin offen sind. Zwischen zwei dieser Schlitze 22 liegt jeweils eine Ausnehmung 23, die allseitig von Material umgeben ist. Beim Anbringen der Halteklammer 25 an den Innenflanschen 15 des Kabelkanals 10 wirken diese Vorsprünge 24 der Halteklammer mit den Ausnehmungen 23 zusammen. Auf der anderen Seite wirken die Stege der abgetrennten Abschnitte der Leisten 13 mit den Schlitzen 22 zusammen. Die Schultern im Bereich der Pilzköpfe der Leisten 13 liegen an den Begrenzungswandungen der Schlitze 22 an.

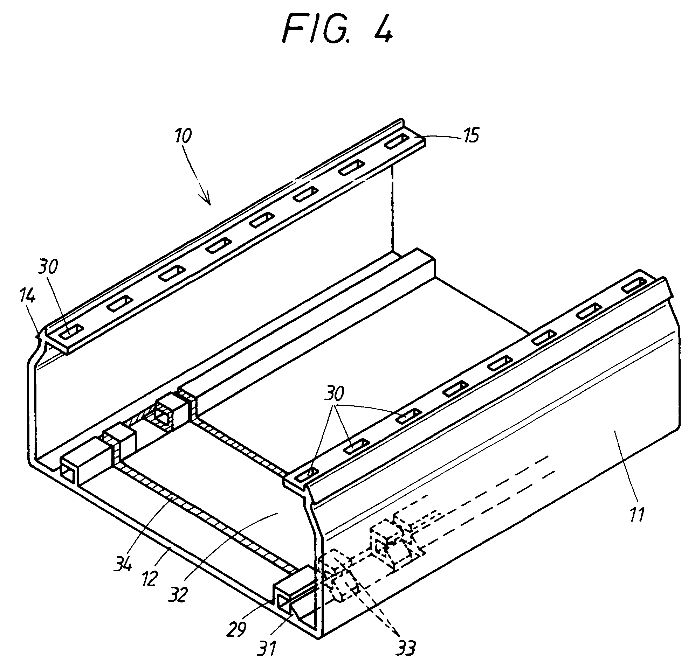

Die in der Fig. 4 wiedergegebene Ausführungsform eines Kabelkanals 10 hat wiederum einen Kabelkanalunterteil von im wesentlichen U-förmigem Querschnitt, also mit parallel und im Abstand zueinander angeordneten Seitenwandungen 11, die durch einen Boden 12 verbunden sind. Jedoch sind die Innenflansche, die am oberen Ende der Seitenwandungen 11 liegen und mit 15 bezeichnet sind, nunmehr abweichend von dem bisherigen Ausführungsformen gestaltet, das gleiche gilt auch für die an der Innenseite des Bodens 12 liegenden Leisten.

Wie die Fig. 4 erkennen läßt, sind in der Nähe der Seitenwandungen 11, an der Innenseite des Bodens 12 liegend, durchlaufende Leisten 29 vorgesehen, die im Querschnitt gesehen L-förmige Gestalt aufweisen. Der im Abstand vom Boden liegende Schenkel dieses L's zeigt dabei auf die Innenseite der Seitenwand 11.

Im Abstand davon, und zwar näher an der Innenseite der Seitenwand 11 liegend, ist eine weitere Leiste 31 vorgesehen. Diese hat eine im Querschnitt gesehen dreieckförmige Gestalt, wobei die Spitze dieses Dreiecks dem freien Schenkel des L's der Leiste 29 zugekehrt ist. Zwischen dieser Spitze und der benachbarten Kante der Leiste 29 ist ein nicht näher bezeichneter Schlitz vorgesehen. Sowohl die Leiste 29 als auch die weitere Leiste 31 sind der Innenseite des Bodens 12 des Kabelkanals 10 unmittelbar angeformt.

Erfindungsgemäß wird nunmehr im Boden 12 eine jetzt mit 32 bezeichnete Halteklammer vorgestanzt. Die Trennlinie zwischen dieser Halteklammer 32 und dem verbleibenden Boden 12 des Kabelkanals ist mit 34 bezeichnet. Die Halteklammer 32 ist lediglich über zwei in der Fig. 4 nicht sichtbare Haltestege mit dem Boden verbunden, wobei diese Haltestege zum Entfernen der Halteklammer 32 aus dem Boden zerstört werden. Die Halteklammer 32 erfaßt auch die Bereiche der beiden Leisten 29 und 31. Es entstehen beim Stanzen der Halteklammer 32 Halteteile 33, die in Abstand voneinander liegen und untereinander gleichgestaltet sind. Diese Halteteile 33 wirken nach dem Entfernen der Halteklammer 32 aus dem Boden 12 des Kabelkanals 10 mit Ausnehmungen 30 zusammen, die in größerer Anzahl jeweils im Bereich des Innenflansches 15 angeordnet sind. Die Ausnehmungen 30 sind in Draufsicht gesehen rechteckig gehalten, wobei die Abmessungen dieser Ausnehmungen denjenigen der Halteteile 33 der Halteklammer 32 angepaßt sind.

Im dargestellten Ausführungsbeispiel ist der gesamte Mittelbereich der Halteklammer 32 eben gehalten. Für den Fall, daß größere Druckkräfte von der Halteklammer 32 aufgenommen werden müssen, kann dieser Bereich auch profiliert sein. Die Anzahl der anzubringenden Profile und deren Aussehen kann abgewandelt werden.

Bei den Ausführungsformen des Kabelkanals nach den Fig. 1 bis 4 der Zeichnung ist vorgesehen, daß die vorgestanzte Halteklammer jeweils die im Bereich des Bodens vorgesehenen Leisten erfaßt, unabhängig davon, welche Querschnittsgestalt diese Leisten haben.

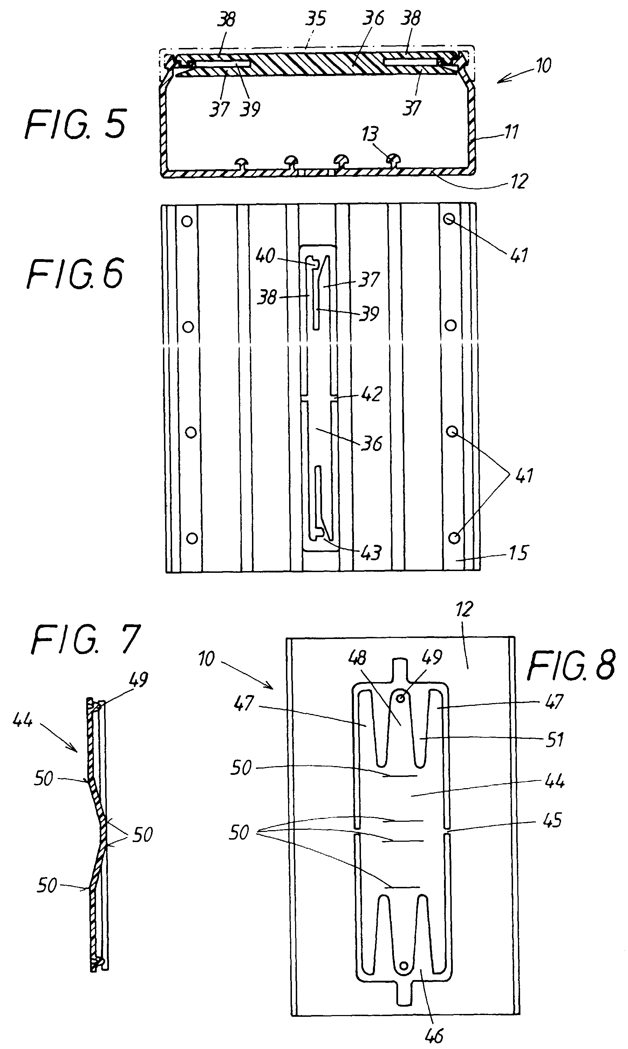

In den Fig. 5 und 6 der Zeichnungen ist eine andere erfindungsgemäße Lösung vorgeschlagen. Diese unterscheidet sich von der bisher geschilderten dadurch, daß die vorgestanzte Halteklammer nicht mehr Bereiche der Leisten des Bodens 12 erfaßt.

Bei dem Ausführungsbeispiel des Kabelkanals 10 nach den Fig. 5 und 6 der Zeichnungen ist wiederum ein im Querschnitt U-förmiger Kabelkanalunterteil vorgesehen. Auf diesen kann, wie in Fig. 5 in strichpunktierten Linien dargestellt, ein Deckel 35 aufgeschnappt werden. An der Innenseite des Bodens 12 sind dem Kabelkanalunterteil in Längsrichtung des Kabelkanals 10 durchlaufende Leisten 13 zugeordnet; diese haben wiederum pilzkopfförmigen Querschnitt. Es sind insgesamt vier derartiger Leisten 13 am Boden vorgesehen.

Gemäß dem Ausführungsbeispiel nach den Fig. 5 und 6 der Zeichnung ist nun im Bereich zwischen den beiden mittleren Leisten 13 eine jetzt mit 36 bezeichnete Halteklammer vorgestanzt. Das Vorstanzen der Halteklammer 36 erfolgt so, daß die Pilzköpfe der Leisten 13 nicht erfaßt werden. Die Trennlinie liegt also neben den durchlaufenden Leisten 13.

Wie die Fig. 6 am besten erkennen läßt, hat die Halteklammer 36 einen ebenen, nicht näher bezeichneten Mittelbereich. In der Mitte desselben sind zwei Haltestege 42 vorgesehen, die diametral gegenüberliegend angeordnet sind, und die die Verbindung der Halteklammer 36 mit dem Boden 12 des Kabelkanals 10 zunächst aufrechterhalten. Jeder Endbereich der Halteklammer 36 ist in zwei Arme aufgeteilt. Dies bedeutet, daß jedes Ende der Halteklammer 36 einen Halteklammerarm 37 sowie einen weiteren Halteklammerarm 38 aufweist. Diese beiden Haltearme 37 und 38 sind durch einen Zwischenraum 39 voneinander getrennt. Es handelt sich dabei uni einen schlitzförmigen Zwischenraum, der in Richtung auf das freie Ende hin offen ist. Im Bereich der Öffnung des Zwischenraumes 39 ist der Halteklammerarm 37 abgeschrägt, derart, daß er in eine Spitze ausläuft. In Nähe des Zwischenraumeintrittes 43 hat der Halteklammerarm 38 einen Vorsprung 40, der im gewählten Ausführungsbeispiel ein massiver Körper mit kreisförmigem Querschnitt ist.

Nach dem Zerstören der Haltestege 42 wird die Halteklammer 36 aus dem Boden 12 des Kabelkanals 10 herausgenommen und in der in Fig. 5 dargestellten Art und Weise mit den Innenflanschen 15 der Seitenwände 11 verbunden. Daraus ergibt sich, daß die Vorsprünge 40 der Halteklammerarme 38 der Halteklammer 36 mit diametral gegenüberliegenden, kreisförmigen Durchbrüchen der Innenflansche 15 zusammenwirken. Die kreisförmigen Durchbrechungen 41 sind dabei in größerer Anzahl an den Innenflanschen 15 vorgesehen. Sie sind untereinander gleichgestaltet und liegen in regelmäßigen Abständen. Selbstverständlich wäre es ohne weiteres möglich, ein und demselben Kabelkanal 10 mehr als eine Halteklammer 36 zuzuordnen.

In den Fig. 7 und 8 der Zeichnungen ist ein weiteres Ausführungsbeispiel eines erfindungsgemäßen Kabelkanals dargestellt. Bei dieser Ausführungsform hat der Kabelkanalboden 12 überhaupt keine Leiste, er ist völlig eben gehalten. Wie die Fig. 8 erkennen läßt, ist in der Mitte eines solchen Kabelkanals 10 eine jetzt mit 44 bezeichnete Halteklammer vorgestanzt. Die Halteklammer 44 ist in der in der Fig. 8 dargestellten Lage über die Haltestege 45 noch mit dem restlichen Boden 12 verbunden. Ansonsten ist eine Durchtrennung zum Boden hin erfolgt.

Die beiden freien Enden der Halteklammer 44 haben jeweils zwei Außenarme 47. Diese sind über jeweils einen Zwischenraum 51 von einem Mittelarm 48 getrennt. Die beiden Seitenarme 47 sind jeweils untereinander gleichgestaltet, das gleiche gilt auch für die Ausbildung des Zwischenraumes 51. Der Mittelarm 48 hat an seiner einen Außenseite liegend, und zwar im Bereich seines vorderen Endes, einen Haltevorsprung 49, der im Querschnitt kreisförmig gestaltet ist.

Über die Länge der Halteklammer 44 verteilt sind die Biegekanten 50 vorgesehen. Durch die Verwendung solcher Biegekanten können Bereiche der Halteklammer 44 aus der Grundebene herausgebogen werden, so wie dies in der Fig. 7 der Zeichnungen wiedergegeben ist. Daraus folgt, daß die beiden freien Enden der Halteklammer 44 aus der horizontalen Grundfläche herausgebogen sind. Nach dem Entfernen der Halteklammer 44 aus dem Boden 12 des Kabelkanals nach der Fig. 8 der Zeichnungen kann diese Halteklammer z.B. in eine der kreisförmigen Ausnehmungen der Innenflansche 15 eingeführt werden.

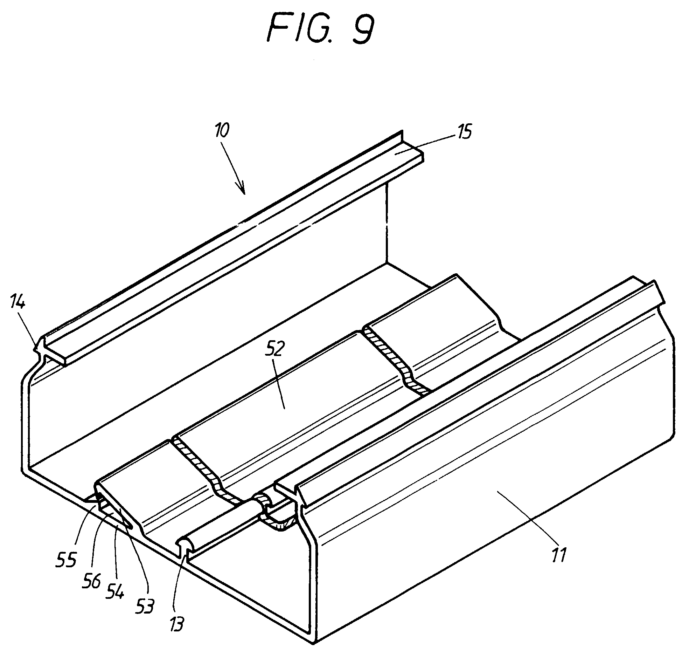

In der Fig. 9 der Zeichnungen ist ein weiteres Ausführungsbeispiel eines erfindungsgemäßen Kabelkanals wiedergegeben. Auch dieser Kabelkanal hat wiederum einen im wesentlichen U-förmigen Querschnitt aufweisenden Kabelkanalunterteil mit Seitenwandungen 11, die über einen Boden 12 miteinander verbunden sind. Dabei sind wiederum an den oberen Enden der Seitenwandungen nach außen ragende Rasten vorgesehen, die dem Anbringen eines Deckels dienen.

Bei der Ausführungsform des Kabelkanals nach der Fig. 9 der Zeichnung ist jedoch im Bereich des Bodens keine Halteklammer vorgestanzt, sondern ein mit 52 bezeichneter Trennwandabschnitt. Diese, einen Bestandteil des Bodens bildende Trennwand besteht aus zwei Trennwandzungen 53 und 54, wobei die eine, nämlich die mit 54 bezeichnete, ein Bestandteil des Bodens 12 ist, während die mit 53 bezeichnete spitzwinklig dazu angeordnet ist. Die beiden Trennwandzungen 53 und 54 laufen in einen nicht näher bezeichneten Scheitel aus. Zwischen den beiden Trennwandzungen 53 und 54 liegt ein Zwischenraum 56, der im Querschnitt gesehen etwa dreieckförmige Gestalt aufweist. Im Bereich des vorderen Endes der Trennwandzunge 54 ist an der Innenseite des Bodens 12 liegend, eine leistenförmige Verdickung 55 vorgesehen. Diese läuft in Längsrichtung des Kabelkanals 10 durch und hat eine dreieckförmige Querschnittsgestalt, wobei die Spitze des Dreiecks in Richtung auf die Trennwandzunge 53 zeigt. Zwischen dieser Spitze der leistenförmigen Verdickung 55 und dem vorderen Ende der Trennwandzunge 53 ist ein Spalt vorhanden.

Die Fig. 9 zeigt auch, daß an der Innenseite des Bodens 12 eine durchlaufende Leiste 13 angeordnet ist. Diese besteht wiederum aus einem Steg und einem Pilzkopf. Es ist aus der Fig. 9 ferner zu erkennen, daß der ausgestanzte Trennwandabschnitt 52 von den übrigen Bereichen frei ist und damit aus dem Boden entfernt werden kann. Nach dem Entfernen kann der Trennwandabschnitt 52 auf einen durchlaufenden Bereich der Leiste 13 aufgeschnappt werden, was in bekannter Weise erfolgen kann. Nach dem Aufschnappen des Trennwandabschnittes 52 befindet sich der Pilzkopf der Leiste 13 im Zwischenraum 56 zwischen den Trennwandzungen 53 und 54.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Insbesondere kann die Gestalt und die Ausbildung der auszustanzenden bzw. vorzustanzenden Halteklammern abweichend von den dargestellten Ausführungen gewählt werden. Auch können ein und demselben Boden mehrere vorzustanzende Halteklammern zugeordnet werden, nur muß dabei darauf geachtet werden, daß die Stabilität des Kabelkanalunterteils dadurch nicht leidet. Die vorgestanzten oder ausgestanzten Halteklammern können einen eben gehaltenen Mittelteil aufweisen. Darüber hinaus ist es aber auch möglich, diese mit Prägungen zu versehen, z.B. dann, wenn die Halteklammern durch Druckkräfte belastet werden. Neben den Halteklammern und der Trennwand können ggf. auch andere Teile aus dem Boden oder einer Seitenwand eines Kabelkanals ausgestanzt werden.

### Bezugszeichenliste:

- 10: Kabelkanal
- 11: Seitenwand (von 10)
- 12: Boden (von 10)
- 13: Leisten (an 12)
- 14: Rasten (an 11)
- 15: Innenflansch (von 11)
- 16: großer Durchbruch (in 15)
- 17: kleiner Durchbruch (in 15)
- 18: Halteklammer (I. Ausf.) Fig. 1
- 19: Befestigungsleiste (von 18)
- 20: Pilzkopf (von 19)
- 21: Trennlinie (von 18 in 12)
- 22: Schlitz (in 15)
- 23: Ausnehmung (in 15)
- 24: Vorsprung (an 25)
- 25: Halteklammer (II. Ausf.) Fig. 2 u. 3
- 26: Leiste (an 12)
- 27: Durchbruch (von 25)
- 28: Haltesteg (für 25 an 12)
- 29: L-förmige Leiste (an 12; Fig. 4)
- 30: Ausnehmung (in 15)
- 31: Halteprofil (an 12; Fig. 4)
- 32: Halteklammer (III. Ausf. Fig. 4)
- 33: Halteteile (von 32)
- 34: Trennlinie (zwischen 12 u. 32, Fig. 4)
- 35: Deckel
- 36: Halteklammer (IV. Ausf. Fig. 5 u. 6)
- 37: Halteklammerarm (von 36)
- 38: Halteklammerarm (von 36)
- 39: Zwischenarm (zwischen 37 u. 38)
- 40: Haltevorsprung (an 38)
- 41: kreisförmiger Durchbruch (in 15)
- 42: Haltesteg (für 36)
- 43: Zwischenraumeintritt
- 44: Halteklammer (V. Ausf. Fig. 7 + 8)
- 45: Haltesteg (für 44)
- 46: Freiraum (in 12 für 44)
- 47: Außenarme (von 44)
- 48: Mittelarm (von 44)
- 49: Haltevorsprung (an 48)
- 50: Biegekanten (von 44)
- 51: Zwischenraum (zwischen 47 u. 48)
- 52: ausgestanzter Trennwandabschnitt
- 53: Trennwandzunge
- 54: Trennwandzunge
- 55: leistenförmige Verdickung (von 54)
- 56: Zwischenraum (zwischen 53 u. 54)

## Patentansprüche

1. Kabelkanal (10), bestehend aus einem Kabelkanalunterteil und einem lösbar damit verbindbaren Deckel, bei dem die Seitenwandungen (11) des Kabelkanalunterteils über Halteklammern (18, 25, 32, 36, 44) abstandhaltend miteinander verbunden sind, und der Boden (12) des Kabelkanalunterteils in Längsrichtung verlaufende Halteleisten (13) aufweist, die gegebenenfalls zum lösbaren Anbringen wenigstens einer den Aufnahmeraum des Kabelkanalunterteils in einzelne Kammern unterteilenden Trennwand benutzbar sind,
**dadurch gekennzeichnet,**
daß die Halteklammer (18, 25, 32, 36, 44) und/oder die Trennwand ein vorgestanzter Bereich des Bodens und/oder einer der Seitenwände des Kabelkanals (10) ist.

2. Kabelkanal nach Anspruch 1, dadurch gekennzeichnet, daß die Halteklammer (18) über zerstörbare Haltestege mit dem Boden (12) des Kabelkanals (10) verbunden ist. (Fig. 1)

3. Kabelkanal nach Anspruch 1 und 2, dadurch gekennzeichnet, daß der als Halteklammer (18) dienende, ausgestanzte Bereich des Bodens (12) Abschnitte (19) der Leisten (13) des Bodens (12) erfaßt. (Fig. 1)

4. Kabelkanal nach Anspruch 3, dadurch gekennzeichnet, daß die Abschnitte (19) der Leisten (13) des Bodens (12) des Kabelkanals (10) als Befestigungsleisten der Halteklammer (18) benutzbar sind, in dem sie nach dem Entfernen der Halteklammer (18) vom Boden (12) mit Durchbrüchen (16, 17) von Bereichen der Seitenwände (11) zusammenwirken. (Fig. 2)

5. Kabelkanal nach 3 und 4, dadurch gekennzeichnet, daß die Befestigungsleisten (19) pilzförmigen Querschnitt aufweisen, und daß die Durchbrüche (16, 17) unterschiedlich groß bemessen sind, derart, daß der größere Durchbruch (16) dem Einführen der Befestigungsleiste (19) dient, während die Begrenzungswandungen des kleineren Durchbruches (17) mit den Schultern des Pilzkopfes der Befestigungsleiste (19) im Sinne einer Lagesicherung der Halteklammer (18) zusammenwirken. (Fig. 1)

6. Kabelkanal nach einem oder mehreren der vorangehenden Ansprüche, dadurch gekennzeichnet, daß die oberen Enden der Seitenwände 11 des Kabelkanals (10) jeweils einen quer zu ihm verlaufenden Innenflansch (15) haben, in dem sich jeweils die Durchbrüche (16 u. 17) befinden. (Fig. 1)

7. Kabelkanal nach Anspruch 1, dadurch gekennzeichnet, daß der vorgestanzte Bereich für die Halteklammer (18) quer zur Längsrichtung des Kabelkanals (10) angeordnet ist. (Fig. 1)

8. Kabelkanal nach Anspruch 7, dadurch gekennzeichnet, daß die Leisten (13) unterhalb des die Durchbrüche (16,17) aufweisenden Innenflansches (15) der Seitenwände (11) des Kabelkanals (10) angeordnet sind. (Fig. 1)

9. Kabelkanal nach Anspruch 1, dadurch gekennzeichnet, daß der vorgestanzte Bereich für die Halteklammer (25) in Längsrichtung des Kabelkanals (10) angeordnet ist. (Fig. 2 u. 3)

10. Kabelkanal nach Anspruch 9, dadurch gekennzeichnet, daß sich die Befestigungsleisten (19) der Halteklammer (25) über deren Gesamtlänge erstrecken, und daß die Halteklammer (25) jeweils an ihrem Ende und in ihrer Mitte liegend einen Vorsprung (24) zu ihrem Anbringen an den Seitenwänden des Kabelkanals (10) aufweist. (Fig. 2 u. 3)

11. Kabelkanal nach Anspruch 9 und 10, dadurch gekennzeichnet, daß die Vorsprünge (24) Teilstücke einer Leiste (26) sind, die dem Boden (12) des Kabelkanals, in der Mitte zwischen zwei Leisten (13) liegend, angeformt sind. (Fig. 2 u. 3)

12. Kabelkanal nach den Ansprüchen 9 bis 11, dadurch gekennzeichnet, daß die Halteklammer (25), unmittelbar neben dem Vorsprung (24) liegend, jeweils einen Durchbruch (27) aufweist. (Fig. 2 u. 3)

13. Kabelkanal nach den Ansprüchen 9 bis 12, dadurch gekennzeichnet, daß die vorgestanzte Halteklammer (25) mit dem Boden (12) des Kabelkanals (10) über zerstörbare Haltestege (28) verbunden ist, die vorzugsweise diagonal gegenüberliegend an Seitenkanten der in Draufsicht gesehen rechteckigen Halteklammer (25) angeordnet sind. (Fig. 2 u. 3)

14. Kabelkanal nach den Ansprüchen 9 bis 13, dadurch gekennzeichnet, daß die Halteklammer (25) an Innenflanschen (15) der Seitenwände (11) des Kabelkanals (10) festlegbar ist, derart, daß Teile der Halteklammer (25) mit Schlitzen (22) und einem Durchbruch (23) des Innenflansches (15) zusammenwirken. (Fig. 2 u. 3)

15. Kabelkanal nach Anspruch 14, dadurch gekennzeichnet, daß der Innenflansch (15) der Seitenwand in gruppenweiser Anordnung jeweils zwei Schlitze (22) aufweist, zwischen denen in mittiger Anordnung der Durchbruch (23) liegt. (Fig. 2 u. 3)

16. Kabelkanal nach den Ansprüchen 1 bis 4, dadurch gekennzeichnet, daß die Halteteile (33) der Halteklammer (32) jeweils aus einem im Querschnitt L-förmigen Teilstück bestehen, welchem unter Freihaltung eines Spaltes ein keilförmiges, weiteres Teilstück (31) zugeordnet ist, und daß diese Halteteile (33) mit Ausnehmungen (30) zusammenwirken, die am Innenflansch (15) der Seitenwand (11) des Kabelkanals (10) angeordnet sind. (Fig. 4)

17. Kabelkanal nach Anspruch 16, dadurch gekennzeichnet, daß eine Vielzahl von Ausnehmungen (30) in Kabelkanallängsrichtung hintereinanderliegend, am Innenflansch (15) der Seitenwand (11) des Kabelkanals (10) angeordnet sind. (Fig. 4)

18. Kabelkanal nach Anspruch 1, dadurch gekennzeichnet, daß die Halteklammer (36) ein vorgestanzter Körper des ebenen Bodens (12) des Kabelkanals (10) ist, der Halteklammerarme (37 bzw. 38) aufweist, von denen einer einen Haltevorsprung (40) hat, und daß die vorgestanzte Halteklammer (36) über entfernbare Haltestege (42) zeitweise mit dem Boden (12) verbunden ist. (Fig. 5 u. 6)

19. Kabelkanal nach Anspruch 18, dadurch gekennzeichnet, daß an jedem Ende der Halteklammer (36) zwei Halteklammerarme (37 bzw. 38) angeordnet sind, die durch einen einen Eintritt (43) aufweisenden Zwischenraum (39) voneinander getrennt sind, und von denen der eine Halteklammerarm (38) den Haltevorsprung (40) aufweist, der nach dem Trennen der Halteklammer (36) vom Boden (12) wahlweise in einem der Durchbrüche (41) des Innenflansches (15) der Seitenwand (11) des Kabelkanals (10) einsetzbar ist. (Fig. 5 u. 6)

20. Kabelkanal nach Anspruch 18 und 19, dadurch gekennzeichnet, daß die dem Haltevorsprung (40) des Halteklammerarmes (38) gegenüberliegende Teilfäche des anderen Halteklammerarmes (37) eine das Anbringen der Halteklammer (36) am Innenflansch (15) erleichternde Abschrägung aufweist. (Fig. 5 u. 6)

21. Kabelkanal nach Anspruch 1, dadurch gekennzeichnet, daß die in einem ebenen Boden (12) des Kabelkanals (10) vorgestanzte Halteklammer (44) an ihren freien Enden jeweils zwei Außenarme (47) aufweist, zwischen denen ein Mittelarm (48) mit einem Haltevorsprung (49) angeordnet ist. (Fig. 7 u. 8)

22. Kabelkanal nach Anspruch 21, dadurch gekennzeichnet, daß die untereinander gleichgestalteten Außenarme (47) über jeweils einen Zwischenraum (51) von dem Mittelarm (48) getrennt sind, und daß der Haltevorsprung (49) im Bereich des vorderen freien Endes der einen Außenseite des Mittelarmes (48) angeordnet ist. (Fig. 7 u. 8)

23. Kabelkanal nach Anspruch 21 und 22, dadurch gekennzeichnet, daß ein Endbereich der Halteklammer (44) unter Verwendung von Biegekanten (50) aus der Grundebene der Halteklammer (44) abgebogen ist. (Fig. 7 u. 8)

24. Kabelkanal nach Anspruch 1, dadurch gekennzeichnet, daß der Boden (12) des Kabelkanals (10) wenigstens einen ausgestanzten Trennwandabschnitt (52) aufweist, der nach seinem Entfernen aus dem Boden (12) auf eine Leiste (13) desselben aufsteckbar ist. (Fig. 9)

25. Kabelkanal nach Anspruch 24, dadurch gekennzeichnet, daß am Boden des Kabelkanals (10) unter Freilassung eines Zwischenraumes (56) Trennwandzungen (53 u. 54) vorgesehen sind, die unter Freilassung eines Spaltes mit einer leistenförmigen Verdickung (55) des Bodens (12) zusammenwirken. (Fig. 9)

## Claims

1. Trunking (10) consisting of a trunking lower section and a detachable cover which can be connected thereto where the side walls (11) of the trunking lower section are connected at a distance to each other by holding clips (18, 25, 32, 36, 44) and the bottom (12) of the trunking lower section has holding strips (13) running in longitudinal direction which may, if necessary, be used for the detachable mounting of at least one partition wall which subdivides the accommodating space of the trunking lower section into individual chambers,
characterised in that
the holding clips (18, 25, 32, 36, 44) and/or the partition wall is/are a pre-stamped section of the bottom and/or of one of the side walls of the trunking (10).

2. Trunking according to claim 1, characterised in that the holding clip (18) is connected to the bottom (12) of the trunking (10) by destructible holding webs (Fig. 1).

3. Trunking according to claims 1 and 2, characterised in that the stamped-out section of the bottom (12) serving as a holding clip (18) grips sections (19) of the strips (13) of the bottom (12) (Fig. 1).

4. Trunking according to claim 3, characterised in that the sections (19) of the strips (13) of the bottom (12) of the trunking (10) can be used as fastening strips of the holding clips (18) in that, after removal of the holding clips (18) from the bottom (12), said sections interact with openings (16, 17) in areas of the side walls (11) (Fig. 2).

5. Trunking according to claims 3 and 4, characterised in that the fastening strips (19) have a mushroom-shaped cross section and that the openings (16, 17) are of different sizes so that the larger opening (16) serves to introduce the fastening strip (19) whereas the limiting walls of the smaller opening (17) interact with the shoulders of the mushroom head of the fastening strip (19) in the sense of a position-securing device for the holding clip (18) (Fig. 1).

6. Trunking according to one or more of the aforementioned claims, characterised in that the top ends of the side walls (11) of the trunking (10) each have an inner flange (15) running at right angles to said end in which the openings (16 and 17) are located (Fig. 1).

7. Trunking according to claim 1, characterised in that the pre-stamped area for the holding clip (18) is arranged at right angles to the longitudinal direction of the trunking (10) (Fig. 1).

8. Trunking according to claim 7, characterised in that the strips (13) are arranged under the inner flange (15) exhibiting the openings (16, 17) of the side walls (11) of the trunking (10) (Fig. 1).

9. Trunking according to claim 1, characterised in that the pre-stamped area for the holding clips (25) is arranged in the longitudinal direction of the trunking (10) (Figs. 2 and 3).

10. Trunking according to claim 9, characterised in that the fastening strips (19) of the holding clip (25) run along their entire length and that the holding clip (25) has at its end and in its middle a projection (24) for mounting said clip on the side walls of the trunking (10) (Figs. 2 and 3).

11. Trunking according to claims 9 and 10, characterised in that the projections (24) are parts of a strip (26) which are moulded on the bottom (12) of the trunking, located in the middle between two strips (13) (Figs. 2 and 3).

12. Trunking according to claims 9 to 11, characterised in that the holding clip (25), located directly beside the projection (24), has an opening (27) (Figs. 2 and 3).

13. Trunking according to claims 9 to 12, characterised in that the pre-stamped holding clip (25) is connected to the bottom (12) of the trunking (10) by means of destructible holding webs (28) which are preferably arranged diagonally opposite on side edges of the holding clip (25), said clip being rectangular in a top view (Figs. 2 and 3).

14. Trunking according to claims 9 to 13, characterised in that the holding clip (25) can be fixed on inner flanges (15) of the side walls (11) of the trunking (10) in such a way that parts of the holding clip (25) interact with slits (22) and an opening (23) of the inner flange (15) (Figs. 2 and 3).

15. Trunking according to claim 14, characterised in that the inner flange (15) of the side wall has groups comprising two slits (22) each between which the opening (23) is located in the centre (Figs. 2 and 3).

16. Trunking according to claims 1 to 4, characterised in that the holding parts (33) of the holding clips (32) each consist of an element having an L-shaped cross section, said element being allocated, a gap being maintained, to a further wedge-shaped element (31), and that these holding parts (33) interact with recesses (30) which are located on the inner flange (15) of the side wall (11) of the trunking (10) (Fig. 4).

17. Trunking according to claim 16, characterised in that a multiplicity of recesses (30), lying consecutively in the longitudinal direction of the trunking, are arranged on the inner flange (15) of the side wall (11) of the trunking (10) (Fig. 4).

18. Trunking according to claim 1, characterised in that the holding clip (36) is a pre-stamped element of the flat bottom (12) of the trunking (10), said element having holding clip arms (37 and 38), one of which has a holding projection (40), and that the pre-stamped holding clip (36) is at times connected to the bottom (12) by removable holding webs (42) (Figs. 5 and 6).

19. Trunking according to claim 18, characterised in that two holding clip arms (37 and 38) are located at each end of the holding clips (36), said arms being separated from each other by a gap (39) having an inlet (43) and one of the two holding clips (38) exhibiting a holding projection (40) which, after separation of the holding clip (36) from the bottom (12), can be optionally inserted in one of the openings (41) of the inner flange (15) of the side wall (11) of the trunking (10) (Figs. 5 and 6).

20. Trunking according to claims 18 and 19, characterised in that the partial surface of the one holding clip arm (37), said surface being arranged opposite the holding projection (40) of the other holding clip arm (38), exhibits a chamfer which facilitates the mounting of the holding clip (36) on the inner flange (15) (Figs. 5 and 6).

21. Trunking according to claim 1, characterised in that the holding clip (44) pre-stamped in a flat bottom (12) of the trunking (10) has, at each of its free ends, two outer arms (47) between which a central arm (48) with a holding projection (49) is arranged (Figs. 7 and 8).

22. Trunking according to claim 21, characterised in that the outer arms (47), which are of identical design, are each separated from the central arm (48) by a space (51) and that the holding projection (49) is located in the area of the front free end of the one outer side of the central arm (48) (Figs. 7 and 8).

23. Trunking according to claims 21 and 22, characterised in that an end section of the holding clip (44) is bent out of the basic plane of the holding clip (44) by means of bent edges (50) (Figs. 7 and 8).

24. Trunking according to claim 1, characterised in that the bottom (12) of the trunking (10) has at least one stamped-out partition wall section (52) which, after it has been removed from the bottom (12), can be mounted onto a strip (13) of said bottom (Fig. 9).

25. Trunking according to claim 24, characterised in that partition wall tongues (53 and 54) are provided on the bottom of the trunking (10), leaving an intermediate space (56), said tongues interacting with a strip-shaped thickening (55) of the bottom (12), leaving a gap (Fig. 9).

## Revendications

1. Goulotte (10) composée d'une partie inférieure et d'un couvercle reliable à elle de manière amovible, les parois latérales (11) de la partie inférieure de la goulotte étant reliées les unes aux autres et maintenues écartées par le biais d'agrafes de retenue (18, 25, 32, 36, 44), le fond (12) de la partie inférieure de la goulotte présentant des barrettes de retenue (13) dans le sens longitudinal utilisables le cas échéant pour fixer de manière amovible au moins une cloison séparatrice subdivisant en plusieurs compartiments l'espace-logement formé par la partie inférieure de la goulotte,
**caractérisée en ce que**
les agrafes de retenue (18. 25, 32, 36, 44) et/ou la paroi séparatrice est/sont une zone pré-matricée du fond et/ou de l'une des parois latérales de la goulotte (10).

2. Goulotte selon la revendication 1, caractérisée en ce que l'agrafe de retenue (18) est reliée avec le fond (12) de la goulotte (10) par des nervures de retenue destructibles. (Fig. 1)

3. Goulotte selon les revendications 1 et 2, caractérisée en ce que la partie poinçonnée du fond (12) servant d'agrafe de retenue (18) inclut des segments (19) des barrettes de retenue (13) présentes sur le fond (12). (Fig. 1)

4. Goulotte selon la revendication 3, caractérisée en ce que les segments (19) des barrettes (13) du fond (12) de la goulotte (10) sont utilisables comme barrettes de retenue des agrafes (18), ceux-ci interagissant avec des percées (16, 17) situées dans des zones des parois latérales (11) une fois l'agrafe de retenue (18) détachée du fond (12). (Fig. 2)

5. Goulotte selon les revendications 3 et 4, caractérisée en ce que les barrettes de retenue (19) présentent une section en champignon et en ce que les percées (16, 17) ont des dimensions différentes de sorte que la grande percée (16) sert à introduire la barrette de fixation (19) tandis que les parois limitatrices de la petite percée (17) interagissent avec les épaulements de la tête-champignon formant la barrette de fixation (19) pour immobiliser l'agrafe de retenue (18) en position. (Fig. 1)

6. Goulotte selon l'une ou plusieurs des revendications précédentes, caractérisée en ce que les extrémités supérieures des parois latérales (11) de la goulotte (10) présentent chacune une bride intérieure (15) transversale à cette extrémité et dans laquelle se trouvent les percées (16 et 17). (Fig. 1)

7. Goulotte selon la revendication 1, caractérisée en ce que la zone pré-matricée destinée à l'agrafe de retenue (18) est disposée transversalement au sens longitudinal de la goulotte (10). (Fig. 1 )

8. Goulotte selon la revendication 7, caractérisée en ce que les barrettes (13) sont situées en-dessous de la bride intérieure (15) présentant les percées (16, 17) et équipant les parois latérales (11) de la goulotte (10). (Fig. 1)

9. Goulotte selon la revendication 1, caractérisée en ce que la zone pré-matricée pour les agrafes de retenue (25) est disposée dans le sens longitudinal de la goulotte (10). (Fig. 2 et 3)

10. Goulotte selon la revendication 9, caractérisée en ce que les barrettes de fixation (19) des agrafes de retenue (25) s'étendent sur toute leur longueur, et en ce que l'agrafe de retenue (25) présente respectivement en son extrémité et en son milieu une saillie (24) permettant de la fixer contre les parois latérales de la goulotte (10). (Fig. 2 et 3)

11. Goulotte selon les revendications 9 et 10, caractérisée en ce que les saillies (24) forment partie d'une barrette (26) épousant les formes du fond (12) de la goulotte situé au milieu entre deux barrettes (13). (Fig. 2 et 3)

12. Goulotte selon les revendications 9 à 11, caractérisée en ce que l'agrafe de retenue (25) reposant immédiatement à côté de la saillie (24) présente chaque fois une percée (27). (Fig. 2 et 3)

13. Goulotte selon les revendications 9 à 12, caractérisée en ce que l'agrafe de retenue (25) pré-matricée est reliée au fond (12) de la goulotte (10) par le biais de nervures de retenue (28) destructibles et disposées de préférence diagonalement face à face contre les arêtes latérales des agrafes de retenue (25) à géométrie rectangulaire lorsque vues de dessus. (Fig. 2 et 3)

14. Goulotte selon les revendications 9 à 13, caractérisée en ce que l'agrafe de retenue (25) est immobilisable contre les brides intérieures (15) des parois latérales (11) de la goulotte (10) de telle sorte que des parties de l'agrafe de retenue (25) interagissent avec des fentes (22) et une percée (23) dans la bride intérieure (15). (Fig. 2 et 3)

15. Goulotte selon la revendication 14, caractérisée en ce que la bride intérieure (15) de la paroi latérale présente deux fentes (22) agencées en groupe et entre lesquelles une percée (23) est agencée centrée. (Fig. 2 et 3)

16. Goulotte selon l'une des revendications 1 à 4, caractérisée en ce que les pièces de retenue (33) formant l'agrafe (32) de retenue se composent chacune d'une partie avant une section en L, partie à laquelle est effectée une autre partie (31) cunéiforme avec maintien dégagé d'un interstice, et en ce que ces pièces de retenue (33) interagissent avec des évidements (30) disposés contre la bride intérieure (15) équipant la paroi latérale (11) de la goulotte (10). (Fig. 4)

17. Goulotte selon la revendication 16, caractérisée en ce qu'un grand nombre d'évidements (30), juxtaposés dans le sens longitudinal de la goulotte, sont disposés contre la bride intérieure (15) de la paroi latérale (11) de la goulotte (10). (Fig. 4)

18. Goulotte selon la revendication 1, caractérisée en ce que l'agrafe de retenue (36) est un corps pré-matricé du fond plan (12) de la goulotte (10) lequel corps présente des bras (37 et 38) pour agrafe de retenue, bras dont un possède une saillie de retenue (40), et en ce que l'agrafe de retenue pré-matricée (36) est reliée temporairement avec le fond (12) par le biais de nervures de retenue (42) amovibles. (Fig. 5 et 6)

19. Goulotte selon la revendication 18, caractérisée en ce qu'à chaque extrémité de l'agrafe de retenue (36) sont disposés deux bras (37 et 38) pour agrafe de retenue séparés l'un de l'autre par un espace intermédiaire (39) présentant un orifice de pénétration (43), bras pour agrafé de retenue dont un (38) présente la saillie de retenue (40), laquelle est utilisable dans l'une des percées (41) ménagée dans la bride intérieure (15) de la paroi latérale (11) de la goulotte (10) après avoir détaché du fond (12) l'agrafe de retenue (36). (Fig. 5 et 6).

20. Goulotte selon les revendications 18 et 19, caractérisée en ce que la surface partielle de l'autre bras (37) pour agrafe de retenue, située en face de la saillie (40) équipant le bras (38) pour agrafe de retenue, présente un biseau facilitant la fixation de l'agrafe de retenue (36) contre la bride intérieure (15). (Fig. 5 et 6)

21. Goulotte selon la revendication 1, caractérisée en ce que l'agrafe de retenue (44) pré-matricée dans un fond plan (12) de la goulotte (10) présente à chaque extrémité libre deux bras extérieurs (47) entre lesquels est disposé un arbre médian (48) présentant une saillie de retenue (49). (Fig. 7 et 8)

22. Goulotte selon la revendication 21, caractérisée en ce que les bras extérieurs aux géométries identiques (47) sont séparés chacun du bras médian (48) par un espace intermédiaire (51), et en ce que la saillie de retenue (49) est disposée dans la zone de l'extrémité libre avant située sur le côté extérieur du bras médian (48). (Fig. 7 et 8)

23. Goulotte selon les revendications 21 et 22, caractérisée en ce qu'une zone terminale de l'agrafe de retenue (44) est incurvée par rapport au plan de la base de l'agrafe de retenue (44), au moyen de bords incurvés (50). (Fig. 7 et 8)

24. Goulotte selon les revendications 1, caractérisée en ce que le fond (12) de la goulotte (10) présente au moins un segment (52) de paroi séparatrice poinçonné, lequel segment est enficable sur une barrette (13) du fond (12) une fois le segment détaché dudit fond (12). (Fig. 9)

25. Goulotte selon la revendication 24, caractérisée en ce que des languettes (53 et 54) pour paroi séparatrice sont prévues sur le fond de la goulotte (10) tout en maintenant libre un espace intermédiaire (56), lesdites languettes, tout en maintenant un interstice dégagé, interagissant avec un renflement (55) du fond (12) en forme de barrette. (Fig. 9)
